# EUROPÄISCHE PATENTSCHRIFT

(11) **EP 2 049 857 B1**
(45) Veröffentlichungstag und Bekanntmachung des Hinweises auf die Patenterteilung: **01.02.2012**
(21) Anmeldenummer: 07801426.3
(22) Anmeldetag: 13.07.2007
(51) Int. Cl.: F27B 17/02, F27D 19/00, F27D 21/00, F27B 5/18, A61C 13/20

(54) **DENTALTECHNIKOFEN UND VERFAHREN ZUR POSITIONSSTEUERUNG EINER ZUGEHÖRIGEN VERSCHLUSSPLATTE**
DENTAL FURNACE, AND METHOD FOR CONTROLLING THE POSITION OF AN ASSOCIATED CLOSING PLATE
FOUR DE TECHNIQUE DENTAIRE ET PROCÉDÉ DE COMMANDE DE LA POSITION D'UNE PLAQUE DE FERMETURE ASSOCIÉE

(30) Priorität: 13.07.2006 DE 102006032655
(43) Veröffentlichungstag der Anmeldung: 22.04.2009
(73) Patentinhaber: Zubler Gerätebau GmbH, 89081 Ulm-Jungingen (DE)
(72) Erfinder: ZUBLER, Kurt, 89233 Neu-Ulm (DE)
(74) Vertreter: Fiener, Josef
(86) Internationale Anmeldenummer: PCT/EP2007/006223
(87) Internationale Veröffentlichungsnummer: WO 2008/006599

(56) Entgegenhaltungen:
- DE-A1- 10 313 406
- DE-A1- 19 754 077
- US-A- 4 498 865

## Beschreibung

Die Erfindung betrifft einen Dentaltechnikofen gemäß dem Oberbegriff des Anspruchs 1 sowie ein Verfahren zur Positionssteuerung einer Verschlussplatte an einem Dentaltechnikofen gemäß Anspruch 7.

Zahnersatzobjekte aus Keramik werden häufig auf Gerüsten in Schichttechnik oder als Zahnkappen hergestellt. Das Gerüst besteht u.a. aus Metalllegierungen, auf die die verschiedenen Schichten aus keramischen Massen aufgetragen, getrocknet und danach gebrannt werden. Zum Trocknen bzw. Brennen werden beispielsweise Multifunktions-Dentaltechniköfen verwendet, die auf die aufgetragene Schicht abgestimmte Programme durchlaufen. Die Programme umfassen beispielsweise eine Trocknungs-, eine Brenn- und eine Abkühlphase. Die einzelnen Phasen werden alle in der gleichen Brennkammer durchlaufen, ihre Dauer ist dabei günstigstenfalls auf die Stärke der aufgetragenen Schicht abgestimmt. Für die Trocknungsphase wird z.B. eine bestimmte Trocknungszeit vorgegeben. Die verwendeten Geräte bestehen mindestens aus einer Brennkammer und einer Verschlussplatte, die relativ zueinander beweglich angeordnet sind. Die Brennkammer wird dabei, in Abhängigkeit vom gewählten Material und Brennverfahren, bei 400 - 600°C gehalten (Bereitschaftstemperatur) und strahlt die entwickelte Wärme im geöffneten Zustand zur Verschlussplatte bzw. dem darauf positionierten Brenngut hin ab. Für eine Trocknungsphase (Schließzeit) wird optimalerweise eine Temperatur von ca. 120°-160°C durchlaufen. Der Brennofen wird schrittweise, meist innerhalb eines Zeitraumes von 6 min geschlossen. Erfahrungsgemäß ist nach dieser Zeit eine ausreichende Trocknung und die langsame Aufheizung des Brenngutes erfolgt. Ist der Ofen vollständig geschlossen, wird die Brennkammer evakuiert und die eigentliche Brennphase eingeleitet.

Obwohl verschiedene, spezielle Brennöfen mit Funktionen ausgestattet sind, die den Brennprozess möglichst materialschonend und zweckmäßig gestalten sollen, werden Opaker- und Keramikmassen oftmals beim Vortrocknen schon stark vorbeschädigt.

So sind beispielsweise Öfen, z. B. wie beschrieben in DE 197 54 077 A1, bekannt, bei denen das Verschließen durch Aufsetzen der Brennkammer auf die Verschlussplatte (Brennteller) bzw. Einfahren der Verschlussplatte in die Brennkammer mit einem Hebesystem (Lift) erfolgt. Nahezu alle Keramiköfen steuern die Vortrockenphase, indem der Lift in einer bestimmten Zeit (Schließzeit) eine definierte Strecke überwindet (Einfahren in die Brennkammer). Eine angenommene Schließzeit mit gleichmäßiger Bewegung in Richtung der geöffneten Brennkammer von 400-600°C bedeutet, dass sich das Objekt, das bei einer Temperatur zwischen 120 und 160°C homogen austrocknet, den größten Teil der Schließzeit außerhalb des notwendigen Temperaturbereichs befindet. Während zu Beginn des Schließvorganges das Objekt bei vollständig geöffneter Brennkammer in einem zu kalten Bereich liegt, nimmt die Temperatur nach oben hin sprunghaft zu. Die Flüssigkeitsanteile an der Oberfläche des unzureichend vorgetrockneten Objektes verdampfen unter Druck, bei zu hoher Temperatur. Bei vorteilhafteren Steuerungen einiger Öfen wird zur Trocknung eine bestimmte Position des Brenntellers angefahren, bei der eine Trocknung im geeigneten Temperaturbereich stattfinden kann, bevor der Lift den Schließprozess fortsetzt.
Der Sollwert für diese Brenntellerposition wird jedoch bei allen Keramiköfen aus der eingestellten Bereitschaftstemperatur abgeleitet und zugeordnet. Solange diese nicht erreicht ist, kann kein Start des Schließprozesses erfolgen.

Ferner sind Geräte mit abkippbaren Brennkammern oder mit einschwenkbar angeordneten Brenntellern erhältlich. Aus der Vielzahl der vorhandenen Geräte entstehen verschiedene Nachteile für den Trocknungsprozess. So ergibt sich bauartbedingt v.a. ein ungleichmäßiger Verlauf der Trocknungsphase. Daraus wiederum resultiert, dass ein Vergleich der Trocknungsparameter zwischen den einzelnen Geräten nur bedingt möglich ist. Es ist daher nahezu unmöglich, eindeutige und standardisierte Bedienungs- bzw. Benutzungsanweisungen abzuleiten, um mit dem jeweils verwendeten Material reproduzierbare Ergebnisse zu erreichen.

Aufgrund der genannten Trocknungsfehler treten u.U. Materialspannungen auf, die zur Riss- und Blasenbildung und damit verbundenen Qualitätsverlusten der Oberflächen der einzelnen Schichten führen können. Auch kann es zu einem mangelndem Verbund der Keramikschichten untereinander kommen.

Weiterhin ist der Prozess grundsätzlich mit einer Wartezeit verbunden, da das Trocknen bzw. Schließen des Ofens erst beginnt, wenn die Bereitschaftstemperatur der Brennkammer erreicht ist.

Aufgabe der vorliegenden Erfindung ist es daher, eine gleichmäßige Trocknung eines Brenngutes, insbesondere Zahnersatzobjektes bei optimaler Temperatur zu erreichen, und dabei die Trocknungs- und Schließzeit auf ein Minimum zu verkürzen.

Die Aufgabe wird durch einen Dentaltechnikofen mit den Merkmalen des Anspruchs 1 und durch ein Verfahren zur Positionssteuerung einer Verschlussplatte an einem Dentaltechnikofen gemäß Anspruchs 7 gelöst. Weitere vorteilhafte Ausführungsformen der Erfindung sind Gegenstand der abhängigen Ansprüche.

Der erfindungsgemäße Dentaltechnikofen weist eine haubenförmige Brennkammer auf, in deren Inneren wenigstens ein Heizelement angeordnet ist. Die Öffnung der Brennkammer ist einer Verschlussplatte zugewandt, die relativ zur Brennkammer beweglich angeordnet ist. Die Verschlussplatte (Brennteller) dient der Aufnahme eines Brenngutes, insbesondere eines Zahnersatzobjektes. Beim Zahnersatzobjekt kann es sich beispielsweise um ein vollständig aus Keramik gefertigtes Objekt, aber auch um Objekte, die ein Gerüst aus Metall aufweisen, handeln und auf die im Herstellungsprozess weitere Materialschichten aufgebrannt werden. Der Dentaltechnikofen ist dadurch gekennzeichnet, dass ein Sensor zur Ermittlung der Brennkammertemperatur vorgesehen ist. Zudem verfügt der Dentaltechnikofen über eine Messvorrichtung zur Aufnahme des Ist-Wertes der Verschlussplattenposition relativ zur Brennkammer sowie eine Recheneinheit zur Ermittlung der Regelabweichung durch Vergleich des ermittelten Ist-Wertes mit einem definierten Soll-Wert und zur Ableitung einer Stellgröße daraus.

Bevorzugt ist am Dentaltechnikofen ein elektrischer, hydraulischer und/oder pneumatischer Antrieb vorgesehen. Bei einer ortsfest angebrachten Brennkammer lässt sich durch diesen Antrieb (Lift) die Verschlussplatte in die Brennkammer hinein, bis zu deren Verschluss, zu bewegen. Darüber hinaus ist es allerdings auch möglich, dass bei Ausführungsformen mit ortsfestem Brennteller die Brennkammer auf den Brennteller zu bewegt wird. In einer weiteren Ausführungsform des Dentaltechnikofens sind sowohl Brennteller als auch Brennkammer beweglich angebracht und können somit aufeinander zu bzw. von einander weg bewegt werden.

Der Ist-Wert der Position der Verschlussplatte relativ zur Brennkammer wird durch eine Messvorrichtung aufgenommen, wobei der Ist-Wert aus dem Abstand zwischen der Verschlussplatte (Brennteller) und der Öffnung der Brennkammer gebildet wird.

Um ein reproduzierbares Trocknungsergebnis der verschiedenen Brenngüter bzw. Zahnersatzobjekte zu erreichen, ist bevorzugt für jedes der in Frage kommenden Brenngüter oder Brenngut-Schichtmaterialien ein spezifischer, von der Brennkammertemperatur abhängiger Soll-Wert der Verschlussplattenposition definiert. Der Sollwert kann darüber hinaus auch abhängig sein vom Temperaturwert am Brennteller bzw. am Brenngut und/oder von der Umgebungstemperatur.

Der Soll-Wert ergibt sich somit beispielsweise aus einer Funktion, in die neben den optimalen Trocknungsparametern für das jeweilige Brenngut, die Temperatur der Brennkammer, die Temperatur an der Verschlussplatte (Brennteller) und/oder Brenngut sowie die Umgebungstemperatur als Berechnungsparameter eingehen. Die spezifischen Soll-Werte für die Verschlussplattenposition sind in der Speichereinheit abgelegt, auf die die Rechnereinheit während der gesamten Trocknungsphase zugreifen kann, um aus dem Soll-Ist-Wertvergleich der Positionswerte die Stellgröße abzuleiten.

Eine bevorzugte Ausführungsform des Dentaltechnikofens weist daher neben dem Sensor zur Temperaturbestimmung in der Brennkammer zusätzlich einen Messfühler zur Aufnahme der Umgebungstemperatur auf. Ein derartiger Sensor ist u.U. dann besonders empfehlenswert, wenn der Dentaltechnikofen beispielsweise an verschiedenen Orten mit stark unterschiedlichen Temperaturen betrieben werden soll, oder aber wenn innerhalb der Laborräume bzw. dem Aufstellort des Ofens, z.B. aufgrund unterschiedlicher Sonneneinstrahlung, starke Temperaturschwankungen auftreten können. Da der Trocknungsprozess bei nicht vollständig geschlossener Brennkammer erfolgt, wird das Brenngut auch von der Umgebungstemperatur beeinflusst. Eine zusätzliche Aufnahme dieses Parameters erfolgt somit im Interesse einer optimalen Steuerung der Trocknungsphase.

In einer weiteren vorteilhaften Ausführungsform des erfindungsgemäßen Dentaltechnikofens erfolgt die Ermittlung von Temperaturwerten am Brennteller und/oder Brenngut durch ein dort angeordnetes Messsystem. Die Ermittlung dieser Temperaturwerte ist in zweifacher Hinsicht besonders vorteilhaft. Zum einen kann die Temperatur am Brennteller und/oder Brenngut als Parameter in die Berechnung des Soll-Wertes der Brenntellerposition eingehen, zum anderen kann dieser Parameter, in der Entwicklungsphase neuer Materialien oder Geräte ermittelt, als Grundlage für die Erstellung entsprechender Bedienungs- bzw. Gebrauchsanweisungen herangezogen werden.

Das Messsystem kann dabei aus einem oder mehreren Sensoren oder Messfühlern aufgebaut sein. Diese befinden sich entweder in der Nähe der Verschlussplatte und/oder des Brenngutes oder sind direkt auf diesen angebracht. Denkbar ist darüber hinaus auch die Anordnung des oder der Sensoren auf, an oder in den für das Brenngut verwendeten Stützen (Brennsockel). Bevorzugt ist die Position des Messsystems dabei entsprechend dem Schichtaufbau des Brenngutes ausgerichtet. Das Brenngut ist dabei in einer bevorzugten Ausführungsform mehrschichtig aufgebaut.

Als positiv zeigt sich, wenn der Dentaltechnikofen eine Speichereinheit aufweist, da in dieser Einheit alle oder ausgesuchte Teile der ermittelten Werte gespeichert werden können. Diese Speicherung erweist sich zum einen als vorteilhaft für die obengenannte Definition von Parametern bei der Entwicklung neuer Materialen und Geräte, zum anderen erlaubt die Speicherung die vollständige Nachvollziehbarkeit der durchgeführten Trocknungen. Dies wiederum ist bei der Fehlersuche hilfreich und, beispielsweise auch im Zuge der Offenlegung der Arbeitsschritte im Rahmen eines Zertifizierungsverfahrens, notwendig.

Die vorliegende Erfindung stellt außerdem ein Verfahren zur Positionssteuerung einer Verschlussplatte an einem Dentaltechnikofen zur Trocknung eines Brennguts gemäß Anspruch 7 zur Verfügung. Dieses Verfahren umfasst die folgenden Schritte:
Zunächst erfolgt die Ermittlung einer aktuellen Brennkammertemperatur. Darüber hinaus kann zusätzlich oder ersatzweise ein Temperaturwert an der Verschlussplatte und/oder am zu trocknenden Brenngut erfolgen. In einem weiteren Schritt wird der ist-Wert der Verschlussplattenposition relativ zur Brennkammer aufgenommen. Die Recheneinheit vergleicht den Ist-Wert mit einem von der Brennkammertemperatur und/oder dem Temperaturwert an der Verschlussplatte und/oder am Brenngut abhängigen Soll-Wert für die Verschlusstellerposition und leitet daraus eine Stellgröße ab. Diese Stellgröße wird an eine Steuerung zum Ausgleich der Abweichung weitergegeben und die Position der Verschlussplatte und/oder der Brennkammer durch Betätigung eines elektrischen, pneumatischen und/oder hydraulischen Antriebs entsprechend eingestellt. Die Ermittlung der obengenannten Werte erfolgt ebenso wie die Ableitung der Stellgröße kontinuierlich während der gesamten Trocknungsphase. Die Soll-Werte für die jeweiligen Arbeitsmaterialen bzw. Brenngüter sind in der Speichereinheit abgelegt, auf die die Rechnereinheit im Zuge des Soll-Ist-Wertvergleichs zugreift. Für die Trocknungsphase, die bei konstanter Temperatur durch Regelung der Verschlussplattenposition wie oben beschrieben erfolgt, ist eine Dauer von ca. 3 Minuten ausreichend, um das Brenngut anschließend in 1-2 Minuten schrittweise bzw. langsam in die heiße Brennkammer einfahren zu können. Vor dem Schließen erfolgt in einem weiteren Schritt die Abfrage der aktuellen Brennkammertemperatur und daraus die Zuweisung der passenden Schließzeit für den Programmablauf. Zusätzlich verhindert ein ständiger Soll-Ist-Wertvergleich das vollständige Schließen oder zu starke Einfahren in die Brennkammer, solange die Temperatur innerhalb der Brennkammer noch über der zulässigen Bereitschaftstemperatur liegt.

Durch eine entsprechende Messvorrichtung wird der Abstand zwischen der Verschlussplatte und einer ihr zugewandten Öffnung der Brennkammer als Ist-Wert aufgenommen.

Um besonders reproduzierbare Ergebnisse zu erreichen, erweist es sich als günstig, zusätzlich eine Ermittlung der Umgebungstemperatur durchzuführen, da der Soll-Wert für die Verschlussplattenposition in einer bevorzugten Ausführungsform des erfindungsgemäßen Verfahrens von der Brennkammertemperatur im geringeren Maße auch von der Umgebungstemperatur abhängt. Darüber hinaus kann in den Sollwert auch bzw. zusätzlich der jeweilige Temperaturwert an der Verschlussplatte und/oder am Brenngut einbezogen werden.

Weitere Vorteile, Merkmale und Besonderheiten der Erfindung ergeben sich aus der nachfolgenden Beschreibung bevorzugter, jedoch nicht beschränkender Ausführungsformen der Erfindung anhand der schematischen und nicht maßstabsgetreuen Zeichnung. Es zeigt:
- Fig. 1: eine bevorzugte Ausführungsform eines erfindungsgemäßen Dentaltechnikofen;
- Fig. 2: eine Schnittdarstellung einer Verschlussplatte; und
- Fig. 3: die Verschlussplatte gemäß Fig. 2 in eingefahrener Position .

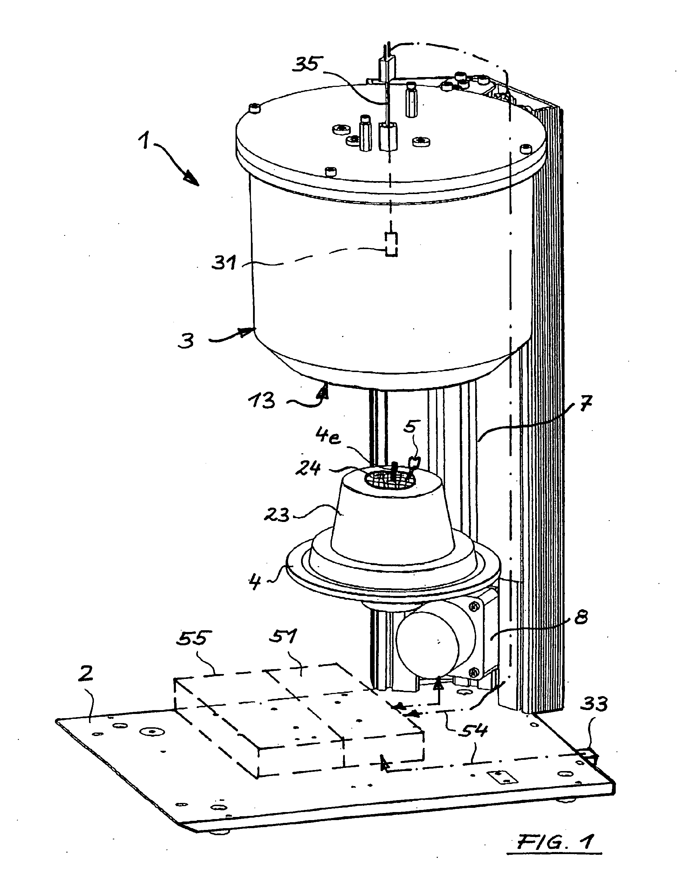

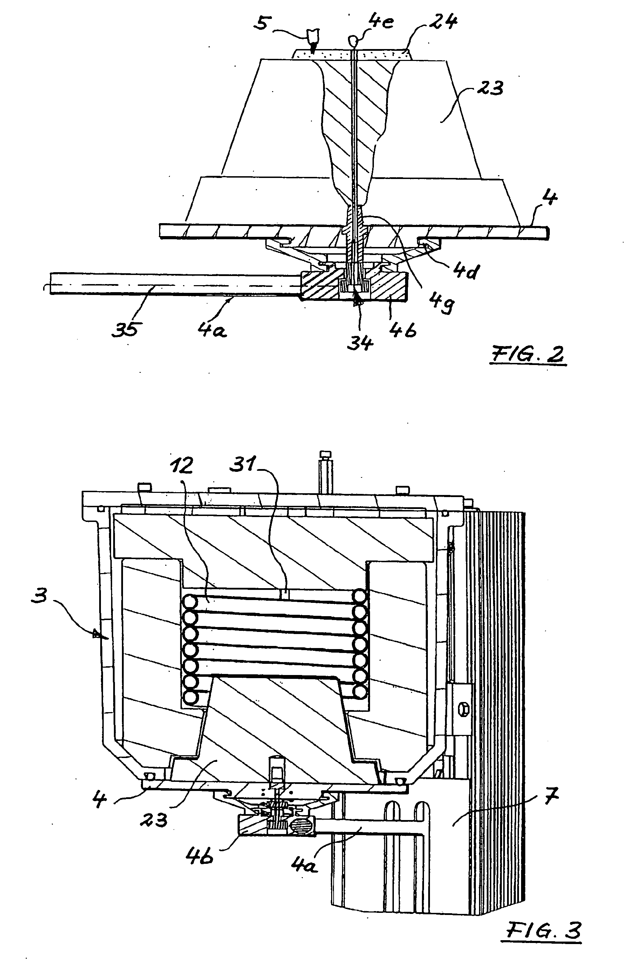

Fig. 1 zeigt ein Ausführungsbeispiel eines erfindungsgemäßen Dentaltechnikofens 1, bei dem eine Brennkammer 3 und eine Verschlussplatte 4 aufeinander zu bewegbar angeordnet sind. Der Verschluss der Brennkammer 3 erfolgt im vorliegenden Fall durch Anpressen der Verschlussplatte 4 an die Brennkammer 3 (vgl. Fig. 3). Die Brennkammer 3 und die Verschlussplatte 4 sind im Ausführungsbeispiel der Fig.1 an einer Führung 7 befestigt. Die Bewegung in Art eines Liftes erfolgt durch einen elektrischen Antrieb 8, der an einer Ofenbasis 2 untergebracht ist und einen in der Führung 7 verlaufenden Zahnriemen antreibt, um die Verschlussplatte 4 in der Höhe zu verfahren. Die Verschlussplatte 4 ist an einer Auflage 4b (vgl. Fig. 2) angebracht, die über ein Verbindungsstück 4a mit der Führung 7 verbunden ist. Die Brennkammer 3 kann ggf. auch beweglich mit der Führung 7 verbunden sein.

Im Innern der Brennkammer 3 sind die Heizelemente 12 (vgl. Fig. 3) angeordnet. Im Ausführungsbeispiel handelt es sich um Heizspiralen, die in der Brennkammer 3 rings umlaufend angeordnet sind. Ein Sensor 31 zur Ermittlung der Temperatur der Brennkammer 3 ist zentral in der Brennkammer 3 angeordnet und über ein Verbindungskabel 35 mit einer Speichereinheit 55 verbunden. Die in der Brennkammer 3 ermittelten Werte werden von einer Recheneinheit 51 fortlaufend aus der Speichereinheit 55 ausgelesen und verarbeitet. Im Ausführungsbeispiel der Fig. 1 ist die Recheneinheit 51 an der Ofenbasis 2 angeordnet. Die Recheneinheit 51 verfügt über eine Tastatur, über die die Eingabe alphanumerischer Daten erfolgen kann. Zusätzlich ist ein Monitor vorgesehen, der u.a. die aktuell ermittelten Werte, die Parameter des gewählten Materials, das gewählte Programm etc. anzeigt. Die Recheneinheit 51 kann auch zusätzlich über Steckplätze zum Anschluss gängiger Speichermedien sowie für die Vernetzung mehrerer Dentaltechniköfen 1 oder zur Verbindung mit einem Server (nicht dargestellt) vorbereitet sein. Zwischen der Recheneinheit 51, der Speichereinheit 55, dem Sensor 31 verlaufen Datenleitungen 54 zur schnellen Übertragung der jeweiligen Werte, ebenso zu einem in der Führung 7 vorgesehenen Positionsmesssystem, der die jeweilige Höhenposition der Verschlussplatte 3 erfasst. Solche Positionsmesssysteme sind beispielsweise aus dem Werkzeugmaschinenbau als Wegmesssysteme bekannt und daher nicht näher beschrieben.

Ein weiterer Messfühler 33 ist zur Ermittlung der Umgebungstemperatur im Ausführungsbeispiel der Fig. 1 als unabhängiges Element dargestellt, das über eine Datenleitung 54 direkt mit der Recheneinheit 51 verbunden ist. Der Messfühler 33 ist nicht unmittelbar am Dentaltechnikofen 1 angebracht, um eine Beeinflussung der Messergebnisse durch von der Brennkammer 3 abgestrahlte Wärme zu vermeiden.

Ein Brennsockel 23 aus Isolationsmaterial und ein Brenngutträger 24 für das Brenngut 5 sind zentral auf der Verschlussplatte 4 angeordnet. Durch die Verschlussplatte 4 und den Brennsockel 23 wird im Ausführungsbeispiel der Fig. 1 ein Messfühler eines Messsystems 34 hindurchgeführt, um kontinuierlich Messdaten zur Temperatur aufzunehmen und über ein Verbindungskabel 35 ebenfalls direkt an die Recheneinheit 51 weiterzugeben. Der Messpunkt 4e des Messsystems 34 ist bevorzugt an der Position des Brenngutes 5, über dem Brennsockel 23 angeordnet.

Durch das vorstehend erwähnte Positionsmesssystem in der Führung 7 wird kontinuierlich der Ist-Wert der Position der Verschlussplatte 4 relativ zur Brennkammer 3 erfasst. Somit wird der Abstand zwischen der (hier nach unten zeigenden) Öffnung 13 der Brennkammer 3 und der der Brennkammer 3 zugewandten Oberfläche des Brennsockels 23 gemessen.

Im Ausführungsbeispiel der Fig. 1 ist in der Speichereinheit 55 oder der Recheneinheit 51 ein beschreibbarer Datenträger (z.B. eine Speicherkarte) vorgesehen, auf dem die Parameter für das jeweilige Material und verschiedene Gerätetypen gespeichert sind und auf den zusätzlich die ermittelten Werte erfasst werden können.

Fig. 2 zeigt eine Schnittdarstellung einer Verschlussplatte 4, die auf einer Auflage 4b aufgesteckt ist. Hierfür werden Ausnehmungen 4d auf der Unterseite der Verschlussplatte 4 mit einer entsprechenden Aufnahme der Auflage 4b in Eingriff gebracht. Zentral auf der Verschlussplatte 4 angeordnet befindet sich ein Zentrierzapfen 4g für die Positionierung des Brennsockels 23. Auf dem Brennsockel 23 kann ein Brenngutträger 24 mit dem Brenngut 5 aufgelegt werden. Im Innern des Zentrierzapfens 4g, sowie im Isolationsmaterial des Brennsockels 23 sind das Messsystem 34 und dessen Anschlussleitungen (zum Anschluss an das Verbindungskabel 35) vorgesehen. Das Messsystem 34 ragt aus der Oberfläche des Brennsockels 23 heraus. Die Auflage 4b ist am Verbindungsstück 4a angeordnet, das mit der Führung 7 des Dentaltechnikofens 1 (in Fig.2 nicht gezeigt) gekoppelt ist.

Die Temperaturmessung findet im Ausführungsbeispiel der Fig. 2 an einem einzigen Messpunkt 4e im Bereich des Brenngutes 5 über dem Brennsockel 23 statt. Darüber hinaus ist es allerdings auch denkbar, zusätzliche Messpunkte an anderen Stellen des Brennsockels 23 oder in der Brennkammer 3 zu definieren, um so noch genauere Messergebnisse zu erreichen. Im Verlauf der Trocknung des auf dem Brennsockel 23 angeordneten Brenngutes 5 erfolgt, sobald nötig, eine Positionsveränderung der Verschlussplatte 4 relativ zur Brennkammer 3. Zur Trocknung wird das Brenngut 5 zunächst auf dem Brennsockel 23 mit Hilfe des Brenngutträgers 24 platziert. Danach werden Verschlussplatte 4 und die in der Aufheizung befindliche Brennkammer 3 aufeinander zu bewegt. Dabei misst der Sensor 31 kontinuierlich die Temperatur in der Brennkammer 3, das Messsystem 34 die Temperatur über dem Brennsockel 23 nahe beim Brenngut 5 und ggf. der Messfühler 33 die Umgebungstemperatur. Zusätzlich wird über das Messsystem in der Führung 7 der Abstand zwischen der Öffnung 13 der Brennkammer 3 und der Verschlussplatte 4 ermittelt und als Ist-Wert an die Recheneinheit 51 weitergegeben. Aus den Temperaturwerten ergibt sich beim Vergleich mit den in der Speichereinheit 55 abgelegten Soll-Werten für die Position der Verschlussplatte 4 bei entsprechenden Temperaturwerten eine Stellgröße. Der Soll-Wert ist eine in Vorversuchen für jedes Material und jeden Gerätetyp ermittelte Größe und gibt jeweils den Abstand zwischen Brennkammer 3 und Verschlussplatte 4 an, bei dem sich das Brenngut 5 während der Trocknungsphase innerhalb des optimalen Temperaturbereiches befindet.

Die Stellgröße wird an einen Regler weitergegeben, der über den Antrieb 8 den Abstand zwischen Verschlussplatte 4 und Brennkammer 3 reguliert, d.h. die beiden Gerätekomponenten annähert oder distanziert. Durch die kontinuierliche Ermittlung der Stellgröße und die daraus resultierende Veränderung des Abstandes zwischen Verschlussplatte 4 und Brennkammer 3 kann unabhängig von der Brennkammertemperatur bereits in der Aufheiz- oder Abkühlphase der Brennkammer 3 des Dentaltechnikofens 1 Brenngut 5 eingebracht und die Trocknung gestartet werden. Daraus resultiert eine erhebliche Zeitersparnis im gesamten Herstellungsprozess von Zahnersatzobjekten, da der Ofen keine Starttemperatur mehr benötigt. So entfällt insbesondere die Wartezeit des Abkühlens bei Folgebränden. Zum anderen kann die für die Aufheizung des Dentaltechnikofens 1 aufgewendete Energie effizienter genutzt werden. Durch die automatische Korrektur der Schließzeit könnte das Trocknen und Schließen vollständig innerhalb der Abkühlungszeit der Brennkammer ablaufen. Aufgrund der kontinuierlichen Temperaturüberwachung kann, wie oben erwähnt, die Trocknung immer im optimalen Temperaturbereich erfolgen. Auch das Schließen ist durch das erfindungsgemäße Verfahren mit einem gleichmäßigen Temperaturanstieg bis zum Moment des vollständigen Verschlusses (vgl. Darstellung in Fig. 3) verbunden, obwohl die Temperatur in der Brennkammer 3 auch während des Schließprozesses noch oberhalb der zulässigen Bereitschaftstemperatur liegen kann. Dies wirkt sich vorteilhaft auf die Qualität der hergestellten Zahnersatzobjekte aus, da durch die Vermeidung von zu schneller oder ungleichmäßig starker Aufheizung Risse und sonstige Oberflächenbeeinträchtigungen unterbunden werden. Weiterhin kann unter der Voraussetzung der optimalen Trocknungsbedingungen die Trocknungszeit und Schließzeit gegenüber den üblichen 6 min weiter auf nur 4-5 min gesenkt werden. Die permanente Überwachung und Speicherung der genannten Parameter erlaubt darüber hinaus eine verbesserte Reproduzierbarkeit der Trocknungsergebnisse.

### Bezugszeichenliste

- 1 =: Dentaltechnikofen
- 2 =: Ofenbasis
- 3 =: Brennkammer ,
- 4 =: Verschlussplatte
- 4a =: Verbindungsstück
- 4b =: Auflage
- 4d =: Ausnehmung
- 4e =: Messpunkt
- 4g =: Zentrierzapfen
- 5 =: Brenngut
- 7 =: Führung
- 8 =: Antrieb
- 12 =: Heizelement
- 13 =: Öffnung
- 23 =: Brennsockel
- 24 =: Brenngutträger
- 31 =: Sensor
- 33 =: Messfühler
- 34 =: Messsystem
- 35 =: Verbindungskabel
- 51 =: Recheneinheit
- 54 =: Datenleitung
- 55 =: Speichereinheit

## Patentansprüche

1. Dentaltechnikofen (1) mit einer haubenförmigen Brennkammer (3) mit einem darin angeordnetem Heizelement (12) und einer Öffnung (13) sowie einer relativ zur Brennkammer (3) beweglichen Verschlussplatte (4) für die Aufnahme und Trocknung eines Brenngutes (5), insbesondere eines Zahnersatzobjektes, wobei der Dentaltechnikofen (1) einen Sensor (31) zur Ermittlung der Brennkammertemperatur aufweist
**dadurch gekennzeichnet, dass**
ein Messsystem zur Aufnahme des ist-Wertes der Verschlussplattenposition relativ zur Brennkammer (3) und eine Recheneinheit (51) zur Ermittlung der Abweichung aus dem Vergleich des ermittelten Ist-Wertes mit einem definierten Soll-Wert zur Ableitung einer Stellgröße für die Ansteuerung der Relativposition zwischen Verschlussplatte (4) und Brennkammer (5) in der Trocknungs phase vorgesehen ist, wobei der Ist-Wert aus dem Abstand zwischen dem Verschlussplatte (4) und der Öffnung (13) der Brennkammer (3) gebildet ist.

2. Dentaltechnikofen nach Anspruch 1, **dadurch gekennzeichnet, dass** ein elektrischer, hydraulischer und/oder pneumatischer Antrieb (8) zur Bewegung der Verschlussplatte (4) und/oder der Brennkammer (3) vorgesehen ist.

3. Dentaltechnikofen nach einem der vorhergehenden Ansprüche, **dadurch gekennzeichnet, dass** zusätzlich ein Messfühler (33) zur Aufnahme der Umgebungstemperatur vorgesehen ist.

4. Dentaltechnikofen nach einem der vorhergehenden Ansprüche, **dadurch gekennzeichnet, dass** für jedes Brenngut (5) ein spezifischer Soll-Wert der Verschlussplattenposition in Abhängigkeit von der Brennkammertemperatur und/oder den Temperaturwerten an der Verschlussplatte (4) und/oder am Brenngut (5) und/oder der Umgebungstemperatur definiertbar ist.

5. Dentaltechnikofen nach einem der vorhergehenden Ansprüche, **dadurch gekennzeichnet, dass** an der Verschlussplatte (4) wenigstens ein Messsystem (34) zur Ermittlung von Temperaturwerten an der Verschlussplatte (4) und/oder am Brenngut (5) angeordnet ist.

6. Dentaltechnikofen nach einem der vorhergehenden Ansprüche, **dadurch gekennzeichnet, dass** eine Speichereinheit (55) zur Speicherung der ermittelten Werte vorgesehen ist.

7. Verfahren zur Positionssteuerung einer Verschlussplatte (4) an einem Dentaltechnikofen (1) zur Trocknung eines brennguts, umfassend die Schritte:
Ermittlung einer aktuellen Brennkammertemperatur und/oder eines Temperaturwertes an der Verschlussplatte (4) und/oder am Brenngut (5),
Ermittlung eines ist-Wertes der Verschlussplattenposition relativ zur Brennkammer (3),
Vergleich des ist-Wertes der Verschlussplattenposition mit einem von der Brennkammertemperatur und/oder dem Temperaturwert an der Verschlussplatte (4) und/oder am Brenngut (5) abhängigen Soll-Wert für die Verschlussplattenposition, wobei als ist-Wert der Abstand zwischen der Verschlussplatte (4) und einer der Verschlussplatte (4) zugewandten Öffnung (13) der Brennkammer (3) in der Trocknungsphase aufgenommen wird,
Ableitung einer Stellgröße aus der Abweichung von Ist-und Sollwert, und
Weitergabe der Stellgröße an einen Antrieb (8) zum Ausgleich der Abweichung.

8. Verfahren nach Anspruch 7, **dadurch gekennzeichnet, dass** zusätzlich eine Ermittlung der Umgebungstemperatur erfolgt

9. Verfahren nach einem der Ansprüche 7 bis 8, **dadurch gekennzeichnet, dass** der Soll-Wert für die Verschlussplattenposition von der Brennkammertemperatur und/oder dem Temperaturwert an der Verschlussplatte (4) und/oder am Brenngut (5) und der Umgebungstemperatur abhängig ist.

10. Verfahren nach Anspruch 7, **dadurch gekennzeichnet, dass** die Schließzeit aus der verbleibenden Abkühlzeit des Dentaltechnikofens (1) auf die Solltemperatur ermittelt wird.

11. Verfahren nach einem der Ansprüche 7 bis 10, **dadurch gekennzeichnet, dass** ein vollständiger Verschluss der Brennkammer (3) erst beim Erreichen der Solltemperatur erfolgt.

## Claims

1. Dental furnace (1) with a hood-shaped firing chamber (3) having a heating element (12) disposed therein, and an opening (13) as well as a closing plate (4) for receiving and drying a dental material (5), in particular an artificial dentures object, the closing plate being movable relative to the firing chamber (3), wherein the dental furnace (1) has a sensor (31) to determine the firing chamber temperature,
**characterised by**
a measuring system to detect the actual value of the closing plate position relative to the firing chamber (3) and a computing unit (51) to determine the difference from the comparison of the detected actual value with a defined desired value to derive a variable for controlling the relative position between closing plate (4) and firing chamber (5) during drying, wherein the actual value is derived from the gap distance between that closing plate (4) and the opening (13) of the firing chamber (3).

2. Dental furnace according to claim 1, **characterised in that** an electric, hydraulic and/or pneumatic drive (8) is provided to move the closure plate (4) and/or the firing chamber (3).

3. Dental furnace according to one of the preceding claims, **characterised in that** an additional sensor (33) is provided to detect the ambient temperature.

4. Dental furnace according to one of the preceding claims, **characterised In that** a specific desired value of the closing plate position is definable for each dental material (5) in dependence of the firing chamber temperature and/or the temperature values at the closing plate (4) and/or at the material (5) and/or the ambient temperature.

5. Dental furnace according to one of the preceding claims, **characterised in that** at least one measuring system (34) is arranged at the closing plate (4) to determine temperature values at the closure plate (4) and/or at the material (5).

6. Dental furnace according to one of the preceding claims, **characterised in that** a memory unit (55) is provided for storing the detected values.

7. Method for controlling the position of a closing plate (4) at a dental furnace (1) for drying a dental material, comprising the steps:
detecting a current firing chamber temperature and/or a temperature value at the closing plate (4) and/or at the dental material (5),
detecting an actual value of the closing plate position relative to the firing chamber (3),
comparing the actual value of the closing plate position with a target value of the closing plate position depending on one of the firing chamber temperature and/or the temperature value at the closing plate (4) and/or at the dental material (5), wherein the gap distance between the closing plate (4) and an opening (13) of the firing chamber (3) directed to the closure plate (4) is detected during drying as actual value,
deriving a variable from the difference between actual and target value, and
transmitting the variable to a drive (8) to balance the difference.

8. Method according to claim 7, **characterised in that** an additional determination of the ambient temperature is made

9. Method according to one of claims 7 to 8, **characterised in that** the target value for the closing plate position is dependent on the temperature of the firing chamber and/or the temperature value at the closing plate (4) and/or at the dental material (5) and the ambient temperature.

10. Method according to claim 7, **characterised in that** the closing time is computed from the remaining cooling time of the dental furnace (1) to a target temperature.

11. Method according to one of claims 7 to 10, **characterised in that** closure of the firing chamber (3) is completed only when the target temperature is reached.

## Revendications

1. Four (1) de technique dentaire, avec une chambre de combustion (3) en forme de hotte dotée d'un élément chauffant (12) disposé dans la chambre et d'une ouverture (13), et avec une plaque de fermeture (4) mobile par rapport à la chambre de combustion (3) et destinée à recevoir et sécher un produit à cuire (5), en particulier un article de prothèse dentaire, sachant que le four (1) de technique dentaire présente un capteur (31) pour déterminer la température de la chambre de combustion,
**caractérisé en ce qu'**il est prévu un système de mesure pour enregistrer la valeur réelle de la position de la plaque de fermeture par rapport à la chambre de combustion (3), et une unité de calcul (51) pour déterminer l'écart provenant de la comparaison entre la valeur réelle déterminée et une valeur de consigne définie, de manière à en déduire une valeur réglante pour la commande de la position relative entre la plaque de fermeture (4) et la chambre de combustion (3) pendant la phase de séchage, sachant que la valeur réelle est formée à partir de la distance entre la plaque de fermeture (4) et l'ouverture (13) de la chambre de combustion (3).

2. Four de technique dentaire selon la revendication 1, **caractérisé en ce qu'**il est prévu un entraînement (8) électrique, hydraulique et/ou pneumatique pour le déplacement de la plaque de fermeture (4) et/ou de la chambre de combustion (3).

3. Four de technique dentaire selon l'une des revendications précédentes, **caractérisé en ce qu'**il est prévu en outre une sonde de mesure (33) pour enregistrer la température ambiante.

4. Four de technique dentaire selon l'une des revendications précédentes, **caractérisé en ce qu'**on peut définir pour chaque produit à cuire (5) une valeur de consigne spécifique de la position de la plaque de fermeture en fonction de la température de la chambre de combustion et/ou en fonction des valeurs de température au niveau de la plaque de fermeture (4) et/ou au niveau du produit à cuire (5), et/ou en fonction de la température ambiante,

5. Four de technique dentaire selon l'une des revendications précédentes, **caractérisé en ce qu'**au moins un système de mesure (34) est disposé sur la plaque de fermeture (4) pour déterminer des valeurs de température au niveau de la plaque de fermeture (4) et/ou au niveau du produit à cuire (5).

6. Four de technique dentaire, selon l'une des revendications précédentes, **caractérisé en ce qu'**il est prévu une unité de mémoire (55) pour sauvegarder les valeurs déterminées

7. Procédé de commande de la position d'une plaque de fermeture (4) sur un four (1) de technique dentaire destiné à sécher un produit à cuire, comprenant les étapes suivantes :
détermination d'une température actuelle de la chambre de combustion et/ou d'une valeur de température au niveau de la plaque de fermeture (4) et/ou au niveau du produit à cuire (5),
détermination d'une valeur réelle de la position de la plaque de fermeture par rapport à la chambre de combustion (3),
comparaison de la valeur réelle de la position de la plaque de fermeture avec une valeur de consigne pour la position de la plaque de fermeture qui est fonction de la température de la chambre de combustion et/ou de la valeur de température au niveau de la plaque de fermeture (4) et/ou au niveau du produit à cuire (5), sachant qu'on enregistre comme valeur réelle, pendant la phase de séchage, la distance entre la plaque de fermeture (4) et
une ouverture (13) de la chambre de combustion (3) qui est tournée vers la plaque de fermeture (4),
déduction d'une valeur réglante à partir de l'écart entre la valeur réelle et la valeur de consigne, et transmission de la valeur réglante un entraînement (8) pour compenser l'écart.

8. Procédé selon la revendication 7, **caractérisé en ce qu'**on effectue en outre une détermination de la température ambiante.

9. Procédé selon la revendication 7 ou 8, **caractérisé en ce que** la valeur de consigne pour la position de la plaque de fermeture est fonction de la température de la chambre de combustion et/ou de la valeur de température au niveau de la plaque de fermeture (4) et/ou au niveau du produit cuire (5), et de la température ambiante.

10. Procédé selon la revendication 7, **caractérisé en ce que** le temps de fermeture est déterminé d'après le temps restant de refroidissement du four (1) de technique dentaire à la température de consigne.

11. Procédé selon l'une des revendications 7 à 10, **caractérisé en ce que** la fermeture totale de la chambre de combustion (3) ne s'effectue qu'à l'atteinte de la température de consigne.
